# EUROPEAN PATENT APPLICATION

(11) **EP 2 398 167 A1**
(43) Date of publication of application: **21.12.2011**
(21) Application number: 10006295.9
(22) Date of filing: 17.06.2010
(51) Int. Cl.: H04B 10/155, G02F 1/11

(54) **Optical carrier generator**

(71) Applicant: Nokia Siemens Networks Oy, 02610 Espoo (FI)
(72) Inventor: Rohde, Harald, 81673 München (DE); Smolorz, Sylvia, 81379 München (DE)
(74) Representative: Bruglachner, Thomas E.

(57) **Abstract**

An optical multi carrier generator is suggested based on an acousto optic modulator with integrated partially reflective mirrors so that a multitude of optical wavelengths at a spectral distance can be created out of a single continuous wave light whereas the created optical lightwaves are separated spatial such that they can be modulated individually.

## Description

The invention relates to an apparatus for optical carrier generation and to a transmission system with at least one optical data modulator. Further, a method for providing spatially separated optical carriers based on an input signal is suggested.

A passive optical network (PON) is a promising approach regarding fiber-to-the-home (FTTH), fiber-to-the-business (FTTB) and fiber-to-the-curb (FTTC) scenarios, in particular as it overcomes the economic limitations of traditional point-to-point solutions.

Several PON types have been standardized and are currently being deployed by network service providers worldwide. Conventional PONs distribute downstream traffic from the optical line terminal (OLT) to optical network units (ONUs) in a broadcast manner while the ONUs send upstream data packets multiplexed in time to the OLT.

In fiber-optic communications, wavelength-division multiplexing (WDM) is a technology which multiplexes multiple optical carrier signals on a single optical fiber by using different wavelengths (colors) of laser light to carry different signals. This allows for a multiplication in capacity, in addition enabling bidirectional communication over one strand of fiber.

WDM systems are divided into different wavelength patterns. Coarse WDM systems typically provide up to 16 channels in the 3rd transmission window (C-band) of silica fibers. Dense WDM systems use the same transmission window but with denser channel spacing. Channel plans vary, but a typical system may provide 40 channels at 100 GHz spacing or 80 channels with 50 GHz spacing. Some technologies are capable of 25 GHz spacing.

Optical access networks, e.g., coherent Ultra-Dense Wavelength Division Multiplex (UDWDM) networks, are deemed to be a promising approach for future data access networks.

Data transmission of spectrally densely spaced wavelengths is utilized by applications as Next Generation Optical Access (NGOA) systems allowing high data rates of, e.g., 100 Gbit/s.

In these optical scenarios, a multitude of optical wavelengths is required in order to be individually modulated. Such optical wavelengths may have a spectral distance of a few Gigahertz and can be used either for a ultra dense wavelength grid optical access system like NGOA, where each user may be assigned to a wavelength of his own or for a transmission of high data rates such as 100 Gbit/s where a multitude of wavelengths are bundled and are transmitted over a small spectral range.

Providing these individual wavelengths by several discrete lasers leads to a huge amount of laser sources that require a significant amount of precision and thus involve high costs.

As an alternative, generating a multitude of carrier wavelengths by e.g. an optical comb generator delivers the carriers in an easy way, but these carriers reside altogether in a single fiber. To individually modulate the single carriers, appropriate electronics for separating these carriers and modulating them individually is needed which leads to significant efforts and costs.

The **problem to be solved** is to overcome the disadvantages stated above and in particular to suggest an efficient solution for providing a multitude of optical wavelengths at a spectral distance of, e.g., a few GHz, each separated spatially such that they can be modulated individually in an easy way.

This problem is solved according to the features of the independent claims. Further embodiments result from the depending claims.

In order to overcome this problem, an apparatus is provided for generating optical wavelengths, comprising
- means for generating a continuous wave light,
- acousto-optic modulator means for receiving the continuous wave light and
- means for shifting the frequency of the continuous wave light in that the acousto-optic modulator further comprises a plurality of partially reflective elements located at predetermined distances and
configured to partially reflect the received continuous wave light in such a way that a plurality of individual optical wavelengths are generated at predetermined locations within the acousto-optic modulator.

With the suggested apparatus, a multitude of optical wavelengths, all having a spectral distance of e.g. a few GHz, can be generated at spatially separated locations and can also be fed outside of the acousto-optic modulator at predetermined locations due to the partially reflective elements integrated in the acousto-optic modulator. The spectral distance of the generated optical wavelengths is determined by the frequency of the acoustic wave fed into the acousto-optic modulator. The frequency of the acoustic wave furthermore determines the predetermined locations where the wavelength shifted light is partially fed outside of the element and also is partially reflected back into the acousto-optic modulator. It is noted that the predetermined locations are spatially separated locations.

In an embodiment, the apparatus comprises a plurality of data modulators, capable to modulate the multitude of generated optic wavelengths, wherein each data modulator is adjacent to each partially reflective element of the acousto-optic modulator. The data modulators may be of type Electro Absorption Modulator (EAM), Mach-Zehnder-Modulator (MZM) or Phase Modulator (PM).

The acousto-optic modulator may be assembled on an appropriate substrate together with the data modulators.

In a further embodiment the data modulators are positioned external to the acousto-optic modulator.

Hence, when assembled together with the optical multi carrier generator in such a way that the data modulators are positioned closely adjacent to the locations of the partially reflective elements of the acousto-optic modulator, the non reflected part of the generated frequency shifted light is fed directly into the data modulators.

In a next embodiment the apparatus may comprise additionally a plurality of amplifiers or attenuators, wherein each amplifier or attenuator is positioned adjacent to each data modulator.

The attenuators or amplifiers can equalize the signal level of each outgoing and modulated optical lightwave.

It is also an embodiment that the means for shifting the frequency of the received continuous wave light is a piezo-electric transducer.

According to another embodiment, the apparatus comprises a first side capable to carry a means for shifting the frequency of the received continuous wave light by generating acoustic waves, and a second side opposite to the first side capable of absorbing said acoustic waves.

Pursuant to another embodiment, the optical multi carrier generator is configured on the receiving side to receive the continuous wave light substantially in a 90 degree angle, so that the reflected light propagates anti-parallel to the original beam and the multitude of frequency shifted light beams all propagate in parallel or anti-parallel direction to the first frequency shifted light beam so that their exit points are substantially evenly spaced.

It is noted that the features described with regard to the different embodiments of the apparatus are applicable for the method in an analogue manner.

Embodiments of the invention are shown and illustrated in the following figures:
- Fig. 1: shows a schematic optical multi wavelength generator based on an acousto optic modulator.
- Fig. 2: shows a small section of the multi wavelength generator with one integrated partially reflective element
- Fig. 3: shows a section of the multi wavelength generator with an integrated partially reflective element and an adjacent electronics e.g. a data modulator connected by a light wave guide
- Fig. 4: shows a schematic optical multi wavelength generator based on a acousto optic modulator using a piezo electric transducer and an acoustic absorber
- Fig. 5: shows a schematic optical multi carrier generator providing 12 optical channels, each coupled to a modulator array and a SOA array and fed into an optical coupler

It is in particular suggested to place the multi wavelength carrier generator on a substrate and integrate the individual data modulators and optical amplifiers on the same substrate.

The individual wavelength outputs may be interconnected to the data modulators and amplifiers via wave guides and fed into an optical coupler to feed the multitude of individual data channels into an optical fibre. Such a device could be used in an OLT.

It is noted, that the multi carrier generator is based on an acousto optic modulator. An acousto optic modulator is well known for signal modulation or for frequency control. Typically an acousto optic modulator comprises a piezoelectric transducer which is attached to a material such as glass or quartz. An oscillating electric signal drives the transducer to vibrate, which creates sound waves in the glass.

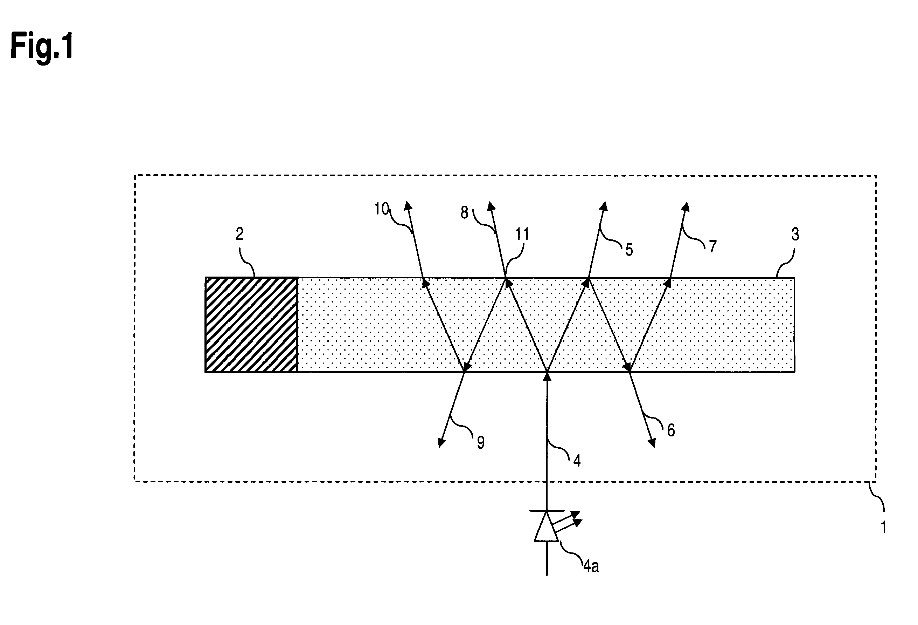

Fig. 1 shows an optical multi wavelength generator 1 in a schematic way comprising a piezo-electric transducer 2 connected to a glass element 3 wherein the piezo-electric transducer is placed orthogonally to the receiving side of the glass element.

A continuous wave light 4, generated by e.g. a cw-laser diode 4a is received by the glass element and propagated in the glass in a specific angle. Due to the acoustic waves induced by the piezo electric transducer 2 the light is shifted in frequency and diffracted, means propagated in the glass element in a specific angle. At the opposite wall of the glass element the light beam emerges from the glass element with a frequency different from the input light 5,8, at different locations and a part of the light is reflected at the inner side of the glass element due to partially reflective elements 11 and again frequency shifted and diffracted due to the acoustic waves. The reflected light beams 6, 9 again emerge at different frequencies from the glass element while a part is reflected once more into the glass element.

In this way multiple wavelengths can be generated out of one single wavelength, each single lightwave having a different frequency from the input lightwave and each lightwave with a different frequency emerges from the glass element at a different location. It is advantageous, that the locations, where the lightwaves emerge from the glass are distinct, because each lightwave can be guided individually to an appropriate data modulator and/or optical amplifier.

Of course, the optical power decreases at each reflection /emerging point, but this fact can be compensated by the successive optical amplifiers or by adaption of the mirror reflectivity.

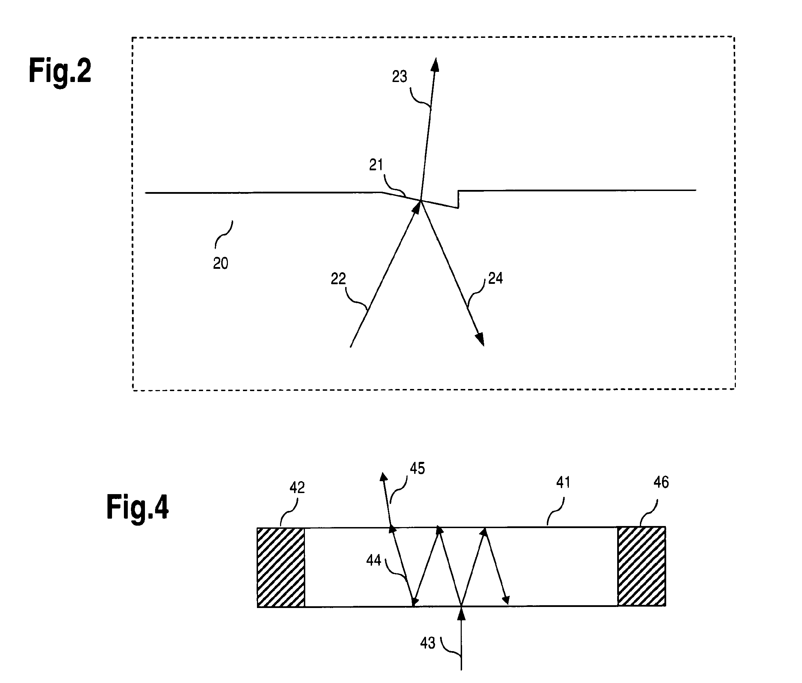

Fig. 2 shows a small section of the multi wavelength generator, especially one side of the glass element 20 and one integrated partially reflective element 21.

A light beam 22 which is conveyed inside of the glass element 25 hits the partially reflective element 21 whereupon a part of the light beam leaves the glass element as light beam 23 and the remaining part of the light beam 22, which does not leave the glass, is back reflected by the partially reflective element and is therefore conveyed to the opposite side of the glass element as light beam 24.

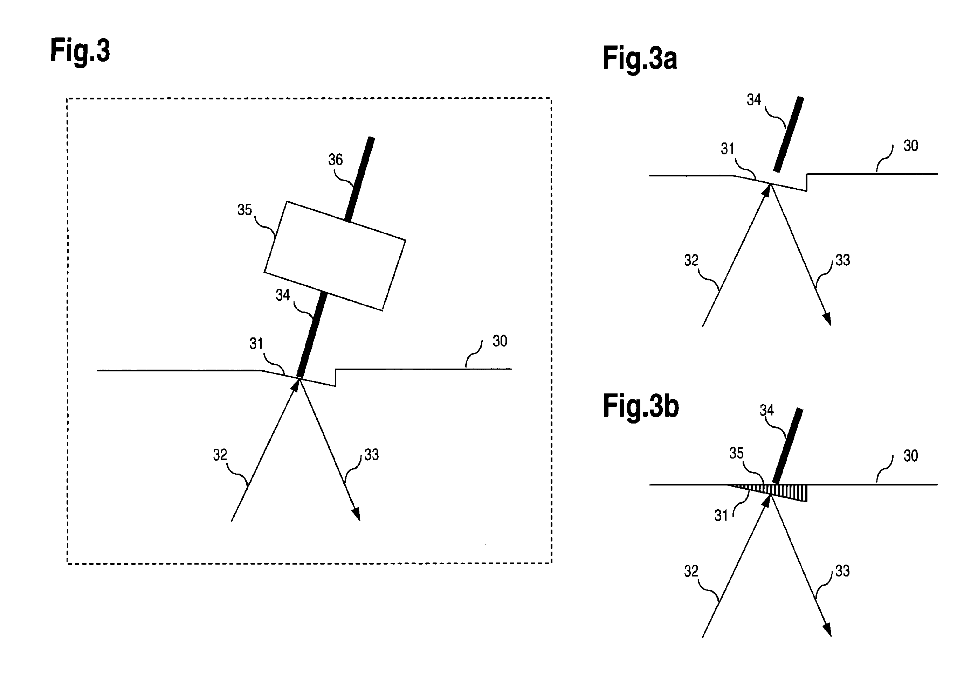

Fig. 3 shows in particular a section of the multi wavelength generator with the integrated partially reflective element 31 plus the adjacent electronics e.g. a data modulator 35 connected by a light waveguide 34. According to the description of fig. 2, a light beam 32 is conveyed inside the glass element and hits the partially reflective element but when the light beam leaves the glass it enters the waveguide 34 and is conducted by the waveguide to the adjacent electronics, e.g. a data modulator. Fig. 3 shows an ideal connection between the partially reflective element and the wave guide. Fig. 3a and Fig. 3b show realistic assemblies between a partially reflective element and a wave guide. In consequence to the production process, when the glass element and the wave guide are mounted onto a substrate, there might be a small gap between the partially reflective element and the waveguide. The small gap may lead to some loss in the light beam by scattering like in Fig. 3a but can be compensated to some extent by putting an index matching fluid into the gap.

Fig. 4 shows another advantageous schematic embodiment of an optical multi wavelength generator 41 based on an acousto optic modulator comprising a piezo electric transducer and an acoustic absorber. The piezo electric transducer 42 is placed orthogonally to the receiving side of the glass element and opposite to the transducer an acoustic absorber 46 is attached. The acoustic absorber helps to prevent the emergence of standing waves, which have to be avoided.

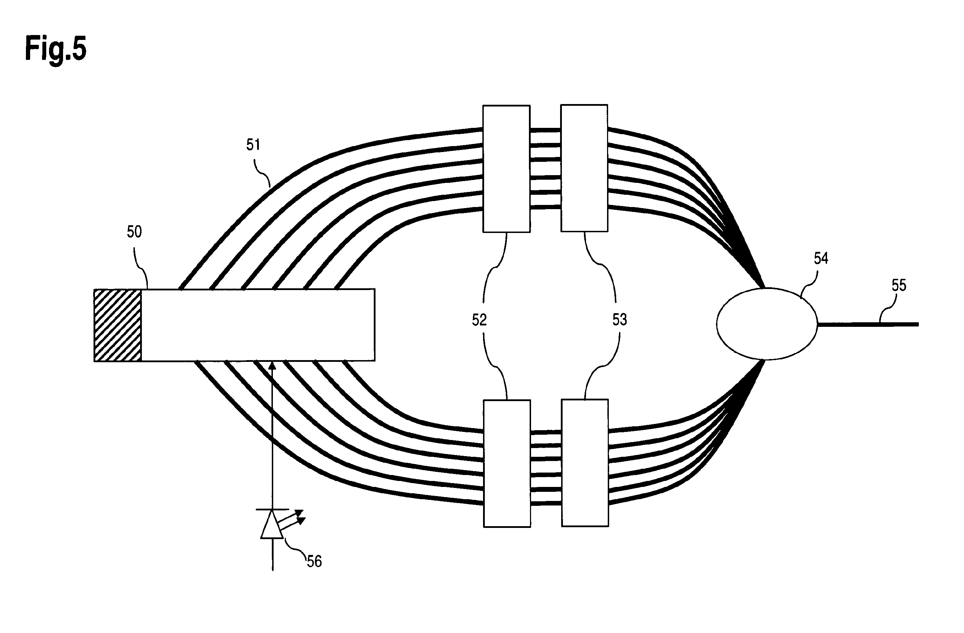

Fig. 5 shows a complete schematic optical multi carrier generator arrangement comprising a cw-laser diode 56 as source, a multitude of spatially separated optical channels 51, emerging from the optical channel generator 50 and each channel coupled to a modulator array 52 and in series to a SOA array 53 and fed into an optical coupler 54. Directly to the optical coupler a waveguide or fiber 55 is connected, which carries the multitude of optical channels, each channel with a different carrier frequency and modulated and amplified individually.

### List of Abbreviations:

- cw-laser: continuous wave laser
- EAM: Electro Absorption Modulator
- MZM: Mach-Zehnder Modulator
- NGOA: Next Generation Optical Access
- OLT: Optical Line Terminal
- ONU: Optical Network Unit
- PM: Phase Modulator
- PON: Passive Optical Network
- FTTH: Fiber-to-the-Home
- FTTB: Fiber-to-the-Business
- FTTC: Fiber-to-the-Curb
- SOA: Semiconductor Optical Amplifier
- WDM: Wavelength Division Multiplexing
- UDWDM: Ultra Dense WDM

## Claims

1. An apparatus for generating optical wavelengths, comprising:
- means for generating a continuous wave light,
- acousto optic modulator means, said acousto optical modulator means comprising means for receiving the continuous wave light and
- means for shifting the frequency of the received continuous wave light,
**characterized in that**
the acousto optic modulator further comprises a plurality of partially reflective elements located at predetermined distances
and configured to partially reflect the received continuous wave light in such a way that a plurality of optical wavelengths are generated at predetermined locations within the acousto optic modulator.

2. An apparatus according to claim 1, wherein, in use, a plurality of optic wavelengths generated within the acousto optic modulator are fed outside the acousto optic modulator at the predetermined spatially separated locations.

3. An apparatus according to claim 2, comprising a plurality of data modulators capable to modulate the optic wavelength, wherein each data modulator is adjacent to each partially reflective element of the acousto optic modulator.

4. An apparatus according to claim 3, wherein the data modulators are positioned external to the acousto optic modulator.

5. An apparatus according to claim 4, further comprising a plurality of amplifiers or attenuators wherein each amplifier or attenuator is positioned adjacent to each data modulator.

6. An apparatus according to any of the preceding claims, wherein the first means for shifting the frequency of the received continuous wave light is a piezo-electric transducer.

7. An apparatus according to claim 1, further comprising
- a first side capable to carry a first means for shifting the frequency of the received continuous wave light,
- a second side positioned opposite to the first side capable to carry an acoustic absorber.

8. An apparatus according to any of the preceding claims, wherein the acousto optic modulator is configured on the receiving side to receive the continuous wave light substantially in a 90 degree angle, so that the reflected light propagates antiparallel to the original beam and the multitude of frequency shifted light beams all propagate in parallel or anti-parallel direction to the first frequency shifted light beam so that their exit points are substantially evenly spaced.

9. A **method** for generating optical wavelengths, comprising
- generation of a continuous wave light,
- providing acousto optic modulator means, said acousto optic modulator means having means for receiving the continuous wave light and
- first means for shifting the frequency of the received continuous wave light,
**characterized in that**
the acousto optic modulator further comprises a plurality of partially reflective elements located at predetermined distances
and configured to partially reflect the received continuous wave light in such a way that a plurality of optical wavelengths are generated at predetermined locations within the acousto optic modulator.
